# EUROPEAN PATENT SPECIFICATION

(11) **EP 4 531 145 B1**
(45) Date of publication and mention of the grant of the patent: **28.01.2026**
(21) Application number: 24203184.7
(22) Date of filing: 27.09.2024
(51) Int. Cl.: H01M 8/04, B60K 1/00, B60K 11/02

(54) **COMMERCIAL VEHICLE COMPRISING A MULTI RADIATOR COOLING SYSTEM**
NUTZFAHRZEUG MIT EINEM MEHRSTRAHLER-KÜHLSYSTEM
VÉHICULE UTILITAIRE DOTÉ D'UN SYSTÈME DE REFROIDISSEMENT À PLUSIEURS RADIATEURS

(30) Priority: 29.09.2023 NL 2035930
(43) Date of publication of application: 02.04.2025
(73) Proprietor: DAF Trucks N.V., 5643 TW Eindhoven (NL)
(72) Inventor: DINGEMANS, Cornelis Petrus Adrianus, 5643 TW Eindhoven (NL)
(74) Representative: V.O.

(56) References cited:
- CN-A- 113 921 852
- CN-A- 115 503 561
- DE-A1- 102007 054 246
- DE-A1- 102021 214 728
- US-A1- 2022 029 182

## Description

The invention relates to a commercial vehicle, comprising an electric drive unit for driving the vehicle and a multi radiator cooling system for cooling the electric drive unit.

Nowadays, an increasing number of commercial vehicles normally driven by sizeable internal combustion engines, such as trucks and buses, are electrified to reduce emission of carbon dioxides and soot. The internal combustion engine is replaced by an electric motor, which may be powered by electric energy generated by fuel cells suspended to the chassis. Fuel cells convert the chemical energy of a fuel (hydrogen), stored in pressurized fuel tanks on board of the vehicle, and an oxidant (air or oxygen) into electricity. In principle, a fuel cell operates like a battery. Unlike a battery however, a fuel cell does not run down or require recharging. It will produce electricity and heat as long as fuel and an oxidizer are supplied. Hence, for commercial vehicles which are to be employed in long-distance and/or high energy consuming applications with minimal downtime due to charging, it may be beneficial to power the vehicle by a fuel cell system.

However, during conversion of fuel into electricity, fuel cells produce a significant amount of heat. For this reason, Fuel Cell Electric Vehicles (FCEVs) are usually provided with a cooling system arranged for removing heat from the fuel cells and maintain their operating temperature within a desired temperature window.

Known cooling systems dissipate heat by a radiator located at the front side of the vehicle to catch ram air during cruising conditions. However, in case of a FCEV, this may not be sufficient to manage the temperature of the fuel cells, especially during high load conditions. For example, when driving uphill at a relatively low speed, a lot of power may need to be provided by the fuel cells, and a single radiator may not suffice to dissipate the generated heat. To increase the cooling capacity of the cooling system, the vehicle may be equipped with additional radiators. However, this may create a more complex system for directing the flow of coolant, as well as higher pumping losses associated therewith, which results in an increased energy consumption penalty. Moreover, to control the flow of coolant, multiple radiator solutions often require complex control strategies and components which are expensive and have an increased risk of failure.

For this reason, multiple radiator setups are not common in heavy duty commercial vehicle applications, and especially not in commercial FCEV's, where energy consumption and downtime are to be minimized.

An example of a vehicle, comprising an electric drive unit for driving the vehicle, and a cooling system for cooling the electric drive unit exhibiting main and auxiliary cooling circuit lines is also known from the document US2022029182A1.

It is an object of the present invention to provide a multiple radiator cooling system for an electrically powered commercial vehicle, without a complex control strategy.

### SUMMARY

In summary, aspects of the invention relate to a commercial vehicle, comprising an electric drive unit for driving the vehicle, and a cooling system for cooling the electric drive unit. The cooling system comprises a main circuit line, extending between a component of the electric drive unit and a main heat exchanger, and comprising a pump for pressurizing the main circuit line at a working pressure to generate a flow of coolant from the component towards the main heat exchanger.

The cooling system further comprises a first auxiliary circuit line, extending from the main circuit line downstream of the pump towards a first auxiliary heat exchanger.

The first auxiliary circuit line comprises a pressure valve that is passively operable by the pump adapting the working pressure in the main circuit line.

The pressure valve is operable between a first state, in which the pressure valve closes the first auxiliary circuit line for directing the flow of coolant towards the main heat exchanger, and a second state, in which the pressure valve opens the first auxiliary circuit line for branching off a portion of the flow of coolant towards the first auxiliary heat exchanger.

In response to a temperature of the component exceeding a temperature threshold, the pump increases the working pressure in the main circuit line for thereby switching the pressure valve from the first state to the second state.

Accordingly, a reliable and robust system is provided for managing multiple heat exchangers (e.g. radiators) in a cooling system. The pressure valve passively switches between the first and second state in response to the working pressure in the main circuit line provided by the pump. For example, in case of an increased temperature of the electric drive unit, the pump raises the working pressure to increase the flow of coolant towards the main heat exchanger. The raised working pressure may cause the pressure valve to passively switch from the first state to the second state, to allow a portion of the flow of coolant to be directed towards the first auxiliary heat exchanger. Conversely, in case of a decreased temperature of the electric drive unit, the pump may lower the working pressure which causes the pressure valve to passively switch to the first state in which the flow of coolant towards the first auxiliary heat exchanger is blocked.

Accordingly, the flow of coolant can be distributed between the main heat exchanger and the first auxiliary heat exchanger, to effectively increase or reduce the cooling performance of the cooling system. By enabling part of the cooling system only when an increased cooling capacity is needed, energy losses can be minimized. Since the pressure valve is operated in a passive fashion, e.g. responsive to the working pressure generated by the pump, the cooling performance of the multiple radiator cooling system can be adapted without requiring complex actuation mechanisms, measurement devices, and control systems.

Preferably, the pressure valve is operable from the first state to the second state by the pump raising the working pressure beyond a maximum pressure threshold. Conversely, the pressure valve may be operable from the second state to the first state by the pump lowering the working pressure below a minimum pressure threshold. The minimum pressure threshold can be equal to the maximum pressure threshold, to allow symmetric operation of the pressure valve. Alternatively, the minimum pressure threshold may be offset from the maximum pressure threshold. For example, the minimum pressure threshold is lower than the maximum pressure threshold, e.g. by 1-20%, preferably by 5-10%. In this way, the pressure valve can be provided with a "hysteresis effect" in which switching from the first state to the second state occurs at a different working pressure, in comparison to switching vice versa, to avoid the pressure valve switching back and forth between the first and second state when the pressure in the main circuit line fluctuates around the maximum or minimum pressure threshold.

In preferred embodiments, the pressure valve has one inlet port connected to the main circuit line, e.g. a proximal part thereof, for receiving the flow of coolant, and two outlet ports respectively connected to the main circuit line, e.g. a distal part thereof, and the first auxiliary circuit line for distributing the flow between the main circuit line and the first auxiliary circuit line. In other words, the pressure valve may be a 3/2-way valve with three ports and two positions (i.e. the first and second state).

The cooling system can be expanded to cool more than two components (e.g. fuel cells) of the electric drive unit, and to accommodate more than two heat exchangers (e.g. radiators). For example, in some embodiments, the cooling system comprises one or more further circuit lines parallel to the main circuit line, each further circuit line extending between a further component of the electric drive unit and the main heat exchanger and comprising a further pump for pressurizing the further circuit line at a further working pressure to generate a flow of coolant from the further component towards the main heat exchanger.

The cooling system may comprise one or more further auxiliary circuit lines parallel to the auxiliary circuit line, each further auxiliary circuit line extending from a respective further circuit line downstream of the further pump towards a further auxiliary heat exchanger.

Each further auxiliary circuit line may comprise a further pressure valve that is passively operable by the pump adapting the working pressure in the further circuit line, wherein the further pressure valve is operable between a first state, in which the further pressure valve closes the further auxiliary circuit line for directing the flow of heated coolant towards the main heat exchanger, and a second state, in which the further pressure valve opens the further auxiliary circuit line for branching off a portion of the flow of coolant towards the further auxiliary heat exchanger.

In response to a temperature of the further component exceeding a temperature threshold, the further pump may increase the working pressure in the further circuit line for thereby switching the further pressure valve from the first state to the second state.

Preferably, the one or more further circuit lines connect to the main circuit line downstream of the pressure valve, e.g. to reduce the length of piping between the electric drive unit and the main heat exchanger. Alternatively, each further circuit line may directly couple the electric drive unit to the main heat exchanger, without merging into the main circuit line.

In some embodiments, the main heat exchanger is mounted behind a grille at a front side of the vehicle and arranged for receiving ram air through the grille. The further heat exchanger(s) may be mounted in other locations on the vehicle, e.g. at or inside the chassis, or behind the cabin.

In exemplary embodiments, the component of the electric drive unit is a fuel cell. In other words, the commercial vehicle may be a Fuel Cell Electric Vehicle (FCEV).

### BRIEF DESCRIPTION OF THE DRAWINGS

The invention will be further elucidated in the figures:
FIG 1 illustrates an embodiment of a commercial vehicle as described herein;
FIG 2 illustrates an embodiment of a cooling system of the commercial vehicle described herein;
FIG 3 illustrates another or further embodiment of the cooling system.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

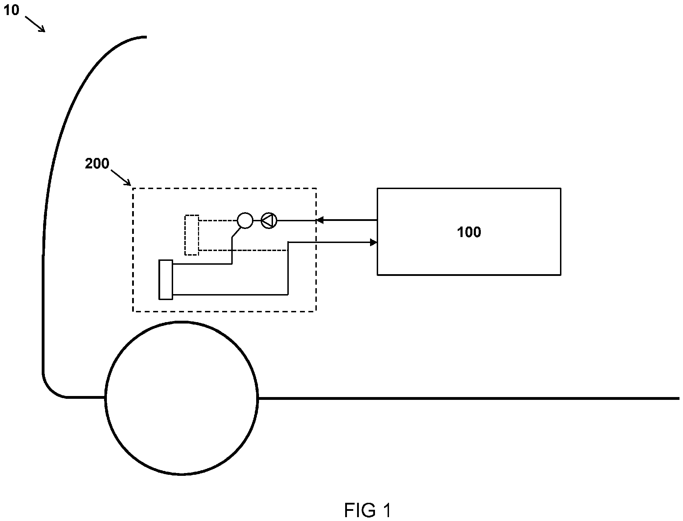

FIG 1 illustrates a commercial vehicle 10, such as a truck or a bus. The commercial vehicle 10 comprises an electric drive unit 100 for driving the vehicle. Preferably, the commercial vehicle is a Fuel Cell Electric Vehicle (FCEV), powered by one or more fuel cells on board of the vehicle. The electric drive unit 100 for example includes components such as an electric motor for driving wheels of the vehicle, one or more fuel cells for converting fuel (hydrogen) to electricity for powering the electric motor, and an optional battery pack for storing the energy. To manage the operating temperature of the electric drive unit 100, the vehicle 10 comprises a cooling system 200 that is arranged for cooling the electric drive unit 100.

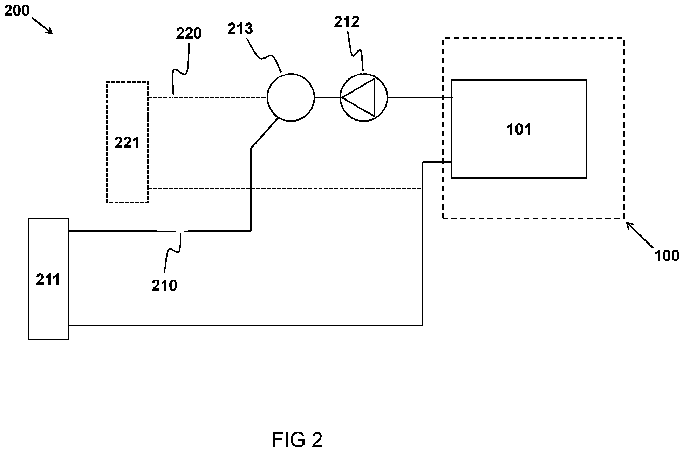

As illustrated in FIG 2, the cooling system 200 comprises a main circuit line 210 that extends between a component 101 of the electric drive unit and a main heat exchanger 211. The main circuit line 210 is provided with a pump 212 for pressurizing the main circuit line 210 at a working pressure to generate a flow of coolant. The flow of coolant transfers heat from the component 101 towards the main heat exchanger 211, where it is dissipated, e.g. into an airflow through and across the main heat exchanger 211. The main heat exchanger 211 can e.g. be mounted behind a grille at a front side of the commercial vehicle 10, for allowing a flow of ram air to pass along the main heat exchanger 211 when the vehicle is driving.

The pump 212 is arranged for adapting the working pressure in the main circuit line 210, e.g. in response to a cooling demand of the component 101. For example, the pump 212 may increase the working pressure when the temperature of the component 101 is increased. The temperature can e.g. be measured by a temperature sensor mounted directly to the component 101, e.g. onto a housing part of the component 101. Alternatively, or additionally, a temperature sensor can be arranged for measuring the temperature of the coolant, e.g. in the main circuit line downstream of the component 101. The temperature of the component 101 can be derived from the measured coolant temperature.

Preferably, the pump 212 is provided in the main circuit line 210 downstream of the component 101 and upstream of the main heat exchanger 211, e.g. in the hot flow of coolant coming from the component 101. Alternatively, the pump 212 can be provided in the cold flow of coolant, downstream of the main heat exchanger 211 and upstream of the component 101.

Downstream of the pump 212, a first auxiliary circuit line 220 extends from the main circuit line 210 towards a first auxiliary heat exchanger 221. The auxiliary circuit line 220 comprises a (hydraulic) pressure valve 213 that is passively operable by the pump 212 adapting the working pressure in the main circuit line 210 between a first state and a second state. Preferably, the pressure valve is a 3/2-way valve, having three ports and operable between two positions (i.e. first and second state). One of the ports may be an inlet port connected to the main circuit line 210, for receiving the flow of coolant. The two other ports can be arranged as outlet ports that are respectively connected to the main circuit line 210 and the first auxiliary circuit line 220, for distributing the flow of coolant therebetween.

In the first position, or state, of the pressure valve 231, the pressure valve 213 closes the first auxiliary circuit line 220 for directing the flow of coolant towards the main heat exchanger 211. In the second state or position, the pressure valve 213 opens the first auxiliary circuit line 220 for branching off a first portion of the flow of coolant towards the first auxiliary heat exchanger 221, and a second portion of the flow of coolant towards the main heat exchanger 211. In other words, the flow of coolant is split between a first flow that is guided towards the main heat exchanger 211 and a second flow that is guided towards the first auxiliary heat exchanger 221. The operation of the pressure valve 213 is performed by the pump 212 adapting the working pressure in the main circuit line 210, in response to which the pressure valve 213 switches between the first and second state.

For example, the pressure valve 213 is operated to switch from the first state to the second state by the pump 212 increasing the working pressure until it exceeds a maximum pressure threshold, at which the pressure valve 213 opens the first auxiliary circuit line 220. Conversely, the pump 212 may operate the pressure valve 213 to switch from the second state to the first state by decreasing the working pressure below a minimum pressure threshold, at which the pressure valve 213 closes the first auxiliary circuit line 220.

The minimum and maximum pressure threshold may be identical, e.g. having the same value. Alternatively, the minimum and maximum pressure threshold may be offset from each other to provide a hysteresis effect that prevents the pressure valve 213 switching back and forth between the first and second state in response to pressure fluctuations in the main circuit line 210. For example, the maximum pressure threshold is higher than the minimum pressure threshold, e.g. by 5-10%.

Switching between the first and second state may be performed in a discrete or gradual fashion, allowing intermediate positions of the pressure valve 213 between the first and second state to control the ratio between the amount of coolant directed towards the main heat exchanger and the first auxiliary heat exchanger. Thus, in response to the pump 212 partially increasing or decreasing the working pressure in the main circuit line 210, the pressure valve 213 may partially open or close the first auxiliary circuit line 220. Alternatively, the pressure valve 213 may be operable between the first and second state in a discrete, stepwise fashion, in which the first auxiliary circuit line 220 is either fully opened, or fully closed.

In the second state, the pressure valve 213 may be arranged for splitting the flow of coolant in two equal parts towards the main heat exchanger 211 and first auxiliary heat exchanger 221, e.g. when the main and first auxiliary heat exchanger 211, 221 are able to remove an equal heat load per unit time from the system. Alternatively, the pressure valve 213 may be arranged to split the flow of coolant into unequal parts in the second state, for example when the heat transfer area of the main heat exchanger 211 is larger than that of the first auxiliary heat exchanger 221, and/or when the position of the main heat exchanger on board the commercial provides a relatively larger or cooler mass flow of air across its heat transfer area, in comparison with the first auxiliary heat exchanger 221.

Optionally each of the heat exchangers of the system may be provided with a fan, to increase the mass flow of air across the respective heat transfer area, e.g. when the amount of ram air is insufficient in relation to the cooling demand of the electric drive unit 100. For example, in high load cases, such as when the vehicle is fully loaded and/or driving uphill, fan(s) can increase the cooling capacity of the heat exchanger(s).

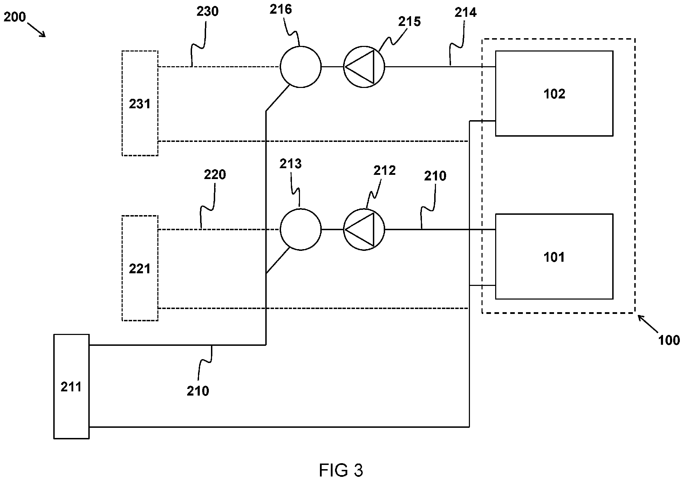

FIG 3 illustrates an exemplary embodiment of the cooling system 200 described herein, when it is arranged for cooling multiple components 101, 102, ..., e.g. two or more components of the electric drive unit 100 in a parallel fashion. As illustrated, a further circuit line 214 is provided parallel to the main circuit line 210. The further circuit line 214 extends between a further component 102 of the electric drive unit 100 and the main heat exchanger 211. For example, the further circuit line 214 connects to the main circuit line 210 downstream of the pressure valve 213. Alternatively, the further circuit line 214 may be coupled directly to the main heat exchanger 211.

As illustrated, the further circuit line 214 comprises a further pump 215 for generating a flow of coolant heated by the further component 102 towards the main heat exchanger 211, and a further pressure valve 216 downstream of the further pump 215. Additionally, the illustrated exemplary cooling system 200 comprises a further auxiliary circuit line 230 parallel to the auxiliary circuit line 220. downstream of the further pump 215, the further auxiliary circuit line 230 extends from the further circuit line 214 towards a further auxiliary heat exchanger 231.

Similar to the pressure valve 213 in the main circuit line 210, in this exemplary embodiment, the further pressure valve 216 in the further circuit line 214 is passively operable by the further pump 215 adapting the working pressure in the further circuit line 214. The further pressure valve 216 is operable between a first state, in which the further pressure valve 216 closes the further auxiliary circuit line 230 for directing the flow of heated coolant towards the main heat exchanger 211, and a second state, in which the further pressure valve 216 opens the further auxiliary circuit line 230 for branching off a portion of the flow of heated coolant towards the further auxiliary heat exchanger 231. In response to a temperature of the further component 102 exceeding a temperature threshold, e.g. under high load conditions of the vehicle, the further pump 215 increases the working pressure in the further circuit line 214 for thereby operating the further pressure valve 216 to switch from the first state to the second state. As a result, the further component 102 of the electric drive unit 100 is cooled by both the main heat exchanger 211 as well as by the further auxiliary heat exchanger 231.

It may be clear that the cooling system described herein can be expanded in case more than two components of the electric drive unit are to be cooled, by adding more further circuit lines in parallel to the main circuit line, each further circuit line connected to a further auxiliary circuit line by a pressure valve that is operable by a further pump adapting the working pressure in the respective further circuit line.

The invention applies not only to commercial vehicle applications where the cooling system is arranged for cooling an electric drive train unit, but also to other technical, agricultural or industrial applications where a cooling system is employed. It will be clear to the skilled person that the invention is not limited to any embodiment herein described and that modifications are possible which may be considered within the scope of the appended claims.

## Claims

1. A commercial vehicle (10), comprising an electric drive unit (100) for driving the vehicle, and a cooling system (200) for cooling the electric drive unit (100), wherein the cooling system (200) comprises:
- a main circuit line (210), extending between a component (101) of the electric drive unit and a main heat exchanger (211), and comprising a pump (212) for pressurizing the main circuit line (210) at a working pressure to generate a flow of coolant;
- a first auxiliary circuit line (220), extending from the main circuit line (210) downstream of the pump (212) towards a first auxiliary heat exchanger (221);
**characterized in that**
the first auxiliary circuit line (220) comprises a pressure valve (213) that is passively operable by the pump (212) adapting the working pressure in the main circuit line (210);
wherein the pressure valve (213) is operable between a first state, in which the pressure valve (213) closes the first auxiliary circuit line (220) for directing the flow of coolant towards the main heat exchanger (211), and a second state, in which the pressure valve (213) opens the first auxiliary circuit line (120) for branching off a portion of the flow of coolant towards the first auxiliary heat exchanger (221); and
wherein, in response to a temperature of the component (201) exceeding a temperature threshold, the pump (212) increases the working pressure in the main circuit line (210) for thereby operating the pressure valve (213) to switch from the first state to the second state.

2. The commercial vehicle (10) according to claim 1, wherein the pressure valve (213) is operable to switch from the first state to the second state by the pump raising the working pressure in the main circuit line (210) beyond a maximum pressure threshold.

3. The commercial vehicle (10) according to any preceding claim, wherein the pressure valve (213) is operable to switch from the second state to the first state by the pump (212) lowering the working pressure in the main circuit line (210) below a minimum pressure threshold.

4. The commercial vehicle (10) according to any preceding claim, wherein the pressure valve (213) has one inlet port connected to the main circuit line (210) for receiving the flow of coolant, and two outlet ports respectively connected to the main circuit line (210) and first auxiliary circuit line (220) for distributing the flow therebetween.

5. The commercial vehicle (10) according to any preceding claim, wherein the cooling system (200) comprises one or more further circuit lines (214) parallel to the main circuit line (210), each further circuit line (214) extending between a further component (102) of the electric drive unit (100) and the main heat exchanger (211) and comprising a further pump (215) for pressurizing the further circuit line (210) to generate a flow of coolant.

6. The commercial vehicle (10) according to claim 5, wherein the cooling system (200) comprises one or more further auxiliary circuit lines (230) parallel to the first auxiliary circuit line (220), each further auxiliary circuit line (230) extending from a respective further circuit line (214) downstream of the further pump (215) towards a further auxiliary heat exchanger (231).

7. The commercial vehicle (10) according to claim 6, wherein each further auxiliary circuit line (230) comprises a further pressure valve (216) that is passively operable by the further pump (215) adapting the working pressure in the further circuit line (214), wherein the further pressure valve (216) is operable between a first state, in which the further pressure valve (216) closes the further auxiliary circuit line (230) for directing the flow of heated coolant towards the main heat exchanger (211), and a second state, in which the further pressure valve (216) opens the further auxiliary circuit line (230) for branching off a portion of the flow of coolant towards the further auxiliary heat exchanger (231).

8. The commercial vehicle (10) according to claim 7, wherein, in response to a temperature of the further component (102) exceeding a temperature threshold, the further pump (215) increases the working pressure in the further circuit line (214) for thereby operating the further pressure valve (216) to switch from the first state to the second state.

9. The commercial vehicle (10) according to any of claims 5-8, wherein the one or more further circuit lines (214) connect to the main circuit line (210) downstream of the pressure valve (213).

10. The commercial vehicle (10) according to any preceding claim, wherein the main heat exchanger (211) is mounted behind a grille at a front side of the vehicle and arranged for receiving ram air through the grille.

11. The commercial vehicle (10) according to any preceding claim, wherein the component (101) of the electric drive unit (100) is a fuel cell.

## Patentansprüche

1. Nutzfahrzeug (10), umfassend eine elektrische Antriebseinheit (100) zum Antreiben des Fahrzeugs, und ein Kühlsystem (200) zum Kühlen der elektrischen Antriebseinheit (100), wobei das Kühlsystem (200) Folgendes aufweist:
- eine Hauptkreislaufleitung (210), die sich zwischen einer Komponente (101) der elektrischen Antriebseinheit und einem Hauptwärmetauscher (211) erstreckt und eine Pumpe (212) zum Beaufschlagen der Hauptkreislaufleitung (210) mit einem Arbeitsdruck aufweist, um einen Kühlmittelstrom zu erzeugen;
- eine erste Hilfskreislaufleitung (220), die sich von der Hauptkreislaufleitung (210) stromabwärts von der Pumpe (212) in Richtung eines ersten Hilfswärmetauschers (221) erstreckt;
**dadurch gekennzeichnet, dass** die erste Hilfskreislaufleitung (220) ein Druckventil (213) aufweist, das passiv durch die Pumpe (212) betreibbar ist, um den Arbeitsdruck in der Hauptkreislaufleitung (210) anzupassen; wobei das Druckventil (213) betreibbar ist zwischen einem ersten Zustand, in dem das Druckventil (213) die erste Hilfskreislaufleitung (220) schließt, um den Kühlmittelstrom in Richtung des Hauptwärmetauschers (211) zu leiten, und einem zweiten Zustand, in dem das Druckventil (213) die erste Hilfskreislaufleitung (120) öffnet, um einen Teil des Kühlmittelstroms in Richtung des ersten Hilfswärmetauschers (221) abzuzweigen, und
wobei die Pumpe (212), als Reaktion auf ein Überschreiten eines Temperaturschwellenwerts durch eine Temperatur der Komponente (201), den Arbeitsdruck in der Hauptkreislaufleitung (210) erhöht, um dadurch das Druckventil (213) zu betätigen, um von dem ersten Zustand in den zweiten Zustand zu wechseln.

2. Nutzfahrzeug (10) nach Anspruch 1, wobei das Druckventil (213) betreibbar ist, um von dem ersten Zustand in den zweiten Zustand zu wechseln, indem die Pumpe den Arbeitsdruck in der Hauptkreislaufleitung (210) über einen maximalen Druckschwellenwert hinaus erhöht.

3. Nutzfahrzeug (10) nach einem der vorstehenden Ansprüche, wobei das Druckventil (213) betreibbar ist, um von dem zweiten Zustand in den ersten Zustand zu wechseln, indem die Pumpe (212) den Arbeitsdruck in der Hauptkreislaufleitung (210) unter einen minimalen Druckschwellenwert absenkt.

4. Nutzfahrzeug (10) nach einem der vorstehenden Ansprüche, wobei das Druckventil (213) einen Einlassanschluss aufweist, der mit der Hauptkreislaufleitung (210) verbunden ist, um den Kühlmittelstrom aufzunehmen, und zwei Auslassanschlüsse, die jeweils mit der Hauptkreislaufleitung (210) und der ersten Hilfskreislaufleitung (220) verbunden sind, um den Strom dazwischen zu verteilen.

5. Nutzfahrzeug (10) nach einem der vorstehenden Ansprüche, wobei das Kühlsystem (200) eine oder mehrere weitere Kreislaufleitungen (214) parallel zu der Hauptkreislaufleitung (210) aufweist, wobei sich jede weitere Kreislaufleitung (214) zwischen einer weiteren Komponente (102) der elektrischen Antriebseinheit (100) und dem Hauptwärmetauscher (211) erstreckt und eine weitere Pumpe (215) zum Beaufschlagen der weiteren Kreislaufleitung (210) mit Druck aufweist, um einen Kühlmittelstrom zu erzeugen.

6. Nutzfahrzeug (10) nach Anspruch 5, wobei das Kühlsystem (200) eine oder mehrere weitere Hilfskreislaufleitungen (230) parallel zu der ersten Hilfskreislaufleitung (220) aufweist, wobei sich jede weitere Hilfskreislaufleitung (230) von einer jeweiligen weiteren Kreislaufleitung (214) stromabwärts von der weiteren Pumpe (215) zu einem weiteren Hilfswärmetauscher (231) erstreckt.

7. Nutzfahrzeug (10) nach Anspruch 6, wobei jede weitere Hilfskreislaufleitung (230) ein weiteres Druckventil (216) aufweist, das passiv von der weiteren Pumpe (215) betreibbar ist, um den Arbeitsdruck in der weiteren Kreislaufleitung (214) anzupassen, wobei das weitere Druckventil (216) betreibbar ist zwischen einem ersten Zustand, in dem das weitere Druckventil (216) die weitere Hilfskreislaufleitung (230) schließt, um den Strom von erwärmtem Kühlmittel in Richtung des Hauptwärmetauschers (211) zu leiten, und einem zweiten Zustand, in dem das weitere Druckventil (216) die weitere Hilfskreislaufleitung (230) öffnet, um einen Abschnitt des Kühlmittelstroms in Richtung des weiteren Hilfswärmetauschers (231) abzuzweigen.

8. Nutzfahrzeug (10) nach Anspruch 7, wobei die weitere Pumpe (215) als Reaktion auf ein Überschreiten eines Temperaturschwellenwerts durch eine Temperatur der weiteren Komponente (102) den Arbeitsdruck in der weiteren Kreislaufleitung (214) erhöht, um dadurch das weitere Druckventil (216) zu betätigen, um von dem ersten Zustand in den zweiten Zustand zu wechseln.

9. Nutzfahrzeug (10) nach einem der Ansprüche 5 bis 8, wobei die eine oder mehreren weiteren Kreislaufleitungen (214) stromabwärts von dem Druckventil (213) mit der Hauptkreislaufleitung (210) verbunden sind.

10. Nutzfahrzeug (10) nach einem der vorstehenden Ansprüche, wobei der Hauptwärmetauscher (211) hinter einem Kühlergrill an einer Vorderseite des Fahrzeugs montiert und angeordnet ist, um Stauluft durch den Kühlergrill aufzunehmen.

11. Nutzfahrzeug (10) nach einem der vorstehenden Ansprüche, wobei die Komponente (101) der elektrischen Antriebseinheit (100) eine Brennstoffzelle ist.

## Revendications

1. Véhicule utilitaire (10) comprenant une unité d'entraînement électrique (100) pour entraîner le véhicule, et un système de refroidissement (200) pour refroidir l'unité d'entraînement électrique (100), dans lequel le système de refroidissement (200) comprend :
une ligne de circuit principale (210), s'étendant entre un composant (101) de l'unité d'entraînement électrique et un échangeur de chaleur principal (211), et comprenant une pompe (212) pour mettre sous pression la ligne de circuit principale (210) à une pression de travail afin de générer un écoulement du liquide de refroidissement ;
une première ligne de circuit auxiliaire (220) s'étendant à partir de la ligne de circuit principale (210) en aval de la pompe (212) vers un premier échangeur de chaleur auxiliaire (221) ;
**caractérisé en ce que** :
la première ligne de circuit auxiliaire (220) comprend une valve de pression (213) qui peut être actionnée, de manière passive, par la pompe (212) qui adapte la pression de travail dans la ligne de circuit principale (210) ;
dans lequel la valve de pression (213) peut être actionnée entre un premier état, dans lequel la valve de pression (213) ferme la première ligne de circuit auxiliaire (220) afin de diriger l'écoulement de liquide de refroidissement vers l'échangeur de chaleur principal (211), et un deuxième état, dans lequel la valve de pression (213) ouvre la première ligne de circuit auxiliaire (120) pour dériver une partie de l'écoulement de liquide de refroidissement vers le premier échangeur de chaleur auxiliaire (221) ; et
dans lequel, en réponse à une température du composant (201) qui dépasse un seuil de température, la pompe (212) augmente la pression de travail dans la ligne de circuit principale (210) afin d'actionner ainsi la valve de pression (213) pour qu'elle passe du premier état au deuxième état.

2. Véhicule utilitaire (10) selon la revendication 1, dans lequel la valve de pression (213) peut être actionnée pour passer du premier état au deuxième état grâce à la pompe qui fait monter la pression de travail dans la ligne de circuit principale (210) au-delà d'un seuil de pression maximum.

3. Véhicule utilitaire (10) selon l'une quelconque des revendications précédentes, dans lequel la valve de pression (213) peut être actionnée pour passer du deuxième état au premier état grâce à la pompe (212) qui abaisse la pression de travail dans la ligne de circuit principale (210) au-dessous d'un seuil de pression minimum.

4. Véhicule utilitaire (10) selon l'une quelconque des revendications précédentes, dans lequel la valve de pression (213) a un orifice d'entrée raccordé à la ligne de circuit principale (210) pour recevoir l'écoulement de liquide de refroidissement, et deux orifices de sortie respectivement raccordés à la ligne de circuit principale (210) et à la première ligne de circuit auxiliaire (220) pour distribuer l'écoulement entre elles.

5. Véhicule utilitaire (10) selon l'une quelconque des revendications précédentes, dans lequel le système de refroidissement (200) comprend une ou plusieurs lignes de circuit supplémentaires (214) parallèles à la ligne de circuit principale (210), chaque ligne de circuit supplémentaire (214) s'étendant entre un composant supplémentaire (102) de l'unité d'entraînement électrique (100) et l'échangeur de chaleur principal (211) et comprenant une pompe supplémentaire (215) pour mettre la ligne de circuit supplémentaire (210) sous pression afin de générer un écoulement de liquide de refroidissement.

6. Véhicule utilitaire (10) selon la revendication 5, dans lequel le système de refroidissement (200) comprend une ou plusieurs lignes de circuit auxiliaires supplémentaires (230) parallèles à la première ligne de circuit auxiliaire (220), chaque ligne de circuit auxiliaire supplémentaire (230) s'étendant à partir d'une ligne de circuit supplémentaire (214) respective en aval de la pompe supplémentaire (215) vers un échangeur de chaleur auxiliaire supplémentaire (231).

7. Véhicule utilitaire (10) selon la revendication 6, dans lequel chaque ligne de circuit auxiliaire supplémentaire (230) comprend une valve de pression supplémentaire (216) qui peut être actionnée, de manière passive, par la pompe supplémentaire (215) qui adapte la pression de travail dans la ligne de circuit supplémentaire (214), dans lequel la valve de pression supplémentaire (216) peut être actionnée entre un premier état, dans lequel la valve de pression supplémentaire (216) ferme la ligne de circuit auxiliaire supplémentaire (230) afin de diriger l'écoulement du liquide de refroidissement chauffé vers l'échangeur de chaleur principal (211), et un deuxième état, dans lequel la valve de pression supplémentaire (216) ouvre la ligne de circuit auxiliaire supplémentaire (230) pour dériver une partie de l'écoulement de liquide de refroidissement vers l'échangeur de chaleur auxiliaire supplémentaire (231).

8. Véhicule utilitaire (10) selon la revendication 7, dans lequel, en réponse à une température du composant supplémentaire (102) qui dépasse un seuil de température, la pompe supplémentaire (215) augmente la pression de travail dans la ligne de circuit supplémentaire (214) pour actionner ainsi la valve de pression supplémentaire (216) afin de passer du premier état au deuxième état.

9. Véhicule utilitaire (10) selon l'une quelconque des revendications 5 à 8, dans lequel les une ou plusieurs lignes de circuit supplémentaires (214) se raccordent à la ligne de circuit principale (210) en aval de la valve de pression (213).

10. Véhicule utilitaire (10) selon l'une quelconque des revendications précédentes, dans lequel l'échangeur de chaleur principal (211) est monté derrière une grille au niveau d'un côté avant du véhicule et agencé pour recevoir l'air dynamique à travers la grille.

11. Véhicule utilitaire (10) selon l'une quelconque des revendications précédentes, dans lequel le composant (101) de l'unité d'entraînement électrique (100) est une pile à combustible.
